# EUROPÄISCHE PATENTANMELDUNG

(11) **EP 3 599 010 A1**
(43) Veröffentlichungstag der Anmeldung: **29.01.2020**
(21) Anmeldenummer: 19187214.2
(22) Anmeldetag: 19.07.2019
(51) Int. Cl.: B01D 53/26, B05B 7/24

(54) **DRUCKLUFTBEFEUCHTUNG - SCHLAUCHENTWÄSSERUNG**

(30) Priorität: 23.07.2018 DE 102018117751; 19.11.2018 DE 102018129038
(71) Anmelder: Mayer, Thomas, 88499 Altheim (DE)
(72) Erfinder: Mayer, Thomas, 88499 Altheim (DE)
(74) Vertreter: Otten, Roth, Dobler & Partner mbB Patentanwälte

(57) **Zusammenfassung**

Lackierluft-Zuleitungssystem 1, umfassend
eine Druckluftleitung (2),
einen Flüssigkeitsabscheider (3) sowie
eine Druckluftkupplung (4) zum Anschluss einer Lackierpistole (5) und
ein Druckluftventil (6),
wobei die Druckluftleitung (2) mit einem ersten Leitungsende (8) an einer Druckluftquelle (9) angeschlossen ist, und wobei die Druckluftleitung mit einem zweiten Leitungsende (10) an dem Flüssigkeitsabscheider (3) angeschlossen ist,
**dadurch gekennzeichnet, dass**
die Druckluftkupplung (4) zwischen dem zweiten Leitungsende (10) und dem Flüssigkeitsabscheider (3) angeschlossen ist und das Druckluftventil (6) nach dem Flüssigkeitsabscheider (32) angeschlossen ist.

## Beschreibung

Die Erfindung betrifft ein Lackierluft-Zuleitungssystem umfassend eine Druckluftleitung, einen Flüssigkeitsabscheider sowie eine Druckluftkupplung zum Anschluss einer Lackiererpistole oder dergleichen und ein Druckluftventil. Die Druckluftleitung ist dabei mit einem ersten Leitungsende an einer Druckluftquelle, beispielsweise einem Kompressor oder einer Anlage zur Aufbereitung von Druckluft für einen Lackiererprozess angeschlossen. Die Druckluftleitung ist mit einem zweiten Leitungsende an dem Flüssigkeitsabscheider angeschlossen.

Üblicherweise wird nach dem Flüssigkeitsabscheider, welcher dazu vorgesehen ist, in der Druckluft enthaltene Flüssigkeit, welche im Lackiererprozess unerwünscht ist, abzuscheiden, eine Lackiererpistole oder dergleichen Vorrichtung angeschlossen.

Überraschenderweise hat sich herausgestellt, dass auch für Lackierprozesse, insbesondere für lösungsmittelbasierte Lackiererprozesse und auch Lacke, die auf Wasserbasis reagieren, eine Verbesserung des Ergebnisses herbeigeführt werden kann, wenn für den Lackierprozess mit Feuchtigkeit angereicherte Druckluft genutzt wird. Insbesondere der Einsatz von mit Feuchtigkeit gesättigter Druckluft, bei einer relativen Feuchte von z.B. über 80%, kann zu erheblicher Verbesserung der Lackiereigenschaften und des Ergebnisses führen.

Nachteilig beim Einsatz von bekannten Lackiererluft-Zuleitungssystemen ist, dass der Flüssigkeitsabscheider einen erheblichen Anteil des für den Lackierprozess relevanten Flüssigkeitsanteils des Druckgases wieder entfernt. Daher hat sich die Erfindung die Aufgabe gestellt, derartige Lackiererluft-Zuleitungssysteme, insbesondere im Bereich von Lösungsmittellacken sowie Lacke auf Wasserbasis zu verbessern. Die Erfindung ist dadurch gekennzeichnet, dass die Druckluftkupplung zwischen dem ersten Leitungsende und dem Flüssigkeitsabscheider angeordnet ist und dass das Druckluftventil nach dem Flüssigkeitsabscheider angeordnet ist.

Durch diese Anordnung ist gewährleistet, dass eine mit hoher Feuchtigkeit versehene Lackierer-Druckluft ohne Flüssigkeitsabscheidung zur Lackiererpistole gelangt, und dadurch den gewünschten Effekt der Verarbeitung erzielen kann.

Es hat sich dabei herausgestellt, dass für die feuchte Druckluft insbesondere ein relativer Feuchtegehalt von über 40 %, bevorzugt über 80 % vorteilhaft ist. Auf diese Weise wird das Lackiererergebnis, insbesondere auch z.B. das Trocknungsergebnis erheblich verbessert. Nicht zuletzt kann oftmals die Verwendung eines Trocknungsofens vermieden werden.

Problematisch ist jedoch, dass bei der Unterbrechung des Lackiererprozesses im Bereich derartig hoher relativer Feuchten von für den Lackiererprozess eingesetzter Druckluft ein Kondensat von Flüssigkeit innerhalb der Druckluftleitung entstehen kann. Der Kondensationsprozess wird insbesondere dann verstärkt, wenn die Druckluft in der Leitung steht, da an der Lackierpistole bzw. Lackieranlage keine Druckluft abgenommen wird. Wird der Lackiererprozess dann fortgesetzt, so wird gegebenenfalls die kondensierte Flüssigkeit durch die Druckluftleitung transportiert und durch die Lackiererpistole abgegeben, da der Flüssigkeitsabscheider erst nach der Druckluftkupplung für die Lackiererpistole angeordnet ist. Aus diesem Grund ist vorgesehen, dass das Druckluftventil, welches im Nachgang zum Flüssigkeitsabscheider angeordnet ist, einen geringen Volumenstrom, insbesondere ein Volumen von einigen Normlitern pro Minute derart passieren lässt, dass im Lackierluft-Zuleitungssystem stets eine Luftströmung fließt. Auf diese Weise wird im Fall von Unterbrechungen bzw. nicht benötigter Lackierluft kontinuierlich zwar Flüssigkeit im Flüssigkeitsabscheider abgeschieden, jedoch erfolgt kein Rückstau der Flüssigkeit im Inneren der Lackierluft-Zuleitung, sodass bei erneutem Bezug von Lackierluft für den Lackiererprozess keine angestaute Flüssigkeitsabgabe über die Lackierluft auf das zu lackierende Objekt erfolgt.

Ein System mit kontinuierlichem Luftverlust, was im Fachjargon oftmals als "Bluter" bezeichnet wird, erlaubt somit eine kontinuierliche Lackierluftströmung. Dabei reichen geringe Strömungen aus. Insbesondere ein Volumen von 10-150 NL/min, vorzugsweise 20-100NL/min., besonders bevorzugt 30-60NL/min, können abgegeben werden, um im Lackierluft-Zuleitungssystem stets eine Luftströmung fließen zu lassen und einen Flüssigkeitsstau zu vermeiden.

Beim Wechsel zwischen starker Luftströmung und schwacher Luftströmung wird der Wechsel zwischen dem Druckluftbezug für den Lackierprozess, als bei z.B. betätigter Lackierpistole und dem "bluten" durch das Druckluftventil zur Herbeiführung einer kontinuierlichen Hintergrundströmung verstanden.

Für die Erfindung ist es weiterhin vorteilhaft, dass das Druckluftventil z.B. als ein Schieberventil oder ein Magnetventil, schaltbar, insbesondere in seinem Volumenstrom regelbar, ausgebildet ist.

Ein Schieberventil erlaubt die Schaltung einer kontinuierlichen Luftabgabe, so dass die Kondensatbildung verringert, insbesondere verhindert wird. Es besteht jedoch auch die Möglichkeit, das Ventil mit dem Bezug von Druckluft aus der Lackierpistole gegenläufig zu schalten, so dass keine Druckluft am Druckluftventil abgegeben wird, solange Lackierluft bezogen wird.

Nicht zuletzt kann es je nach Menge des anfallenden Kondensats erforderlich sein, die Abgabemenge der Druckluft am Druckluftventil, also das Blutervolumen, zu steuern oder zu regeln, um eine Kondensation in dem Lackierprozess störenden Maße zu vermeiden und sich ändernden Bedingungen, z.B. Temperatur oder Geräteparametern anzupassen.

Es ist überdies vorteilhaft, die Druckluftleitung in einem stetigen Gefälle derart zu verlegen, dass möglicherweise anfallendes Kondensat im Inneren der Druckluftleitung entweder zurück zu einer Druckluftquelle oder nach vorne zu dem Flüssigkeitsabscheider fließt. Durch den kontinuierlichen Luftstrom, welcher durch das "bluten" am Druckluftventil herbeigeführt wird, wird das Kondensat in Form von Flüssigkeit stetig abtransportiert und eine Abgabe während des Lackiervorgangs wird vermieden.

Dabei kann der Leitungsverlauf entweder stetig monoton fallend, in die eine Richtung, hin zur Druckluftquelle, oder die andere Richtung, hin zum Flüssigkeitsabscheider, verlaufen, oder es kann eine Art Dachform gewählt werden, wobei von einem Scheitelpunkt ausgehend ein erster Abschnitt mit einem stetigen monoton fallenden Verlauf zurück zur Druckluftquelle und von dem Scheitelpunkt ausgehend ein zweiter Abschnitt mit einem stetig monoton fallenden Verlauf hin zum Flüssigkeitsabscheider geführt wird.

Weitere vorteilhafte Ausführungen sind überdies in den abhängigen Ansprüchen angegeben.

Zur verbesserten Vermeidung von Kondensation ist vorgesehen, dass die Druckluftleitung zwischen Druckluftquelle und Druckluftkupplung zumindest abschnittweise, insbesondere vollständig eine Heizeinrichtung umfasst. Durch leichte Erwärmung der bereit gestellten Druckluft wird die relative Feuchte gesenkt und eine Kondensation in der Leitung verringert oder vermieden.

Besonders bevorzugt ist überdies, dass der Anschlussschlauch zwischen der Druckluftkupplung und der Lackierpistole ebenfalls eine Heizung umfasst, so dass auch dort die relative Feuchte der Druckluft durch Erwärmung auf einen Punkt eingestellt werden, an welchem Kondensation vermieden wird.

Überdies ist auch eine Variante denkbar, bei welcher der Anschlussschlauch eine Schutzhülle umfasst. Die Anschlussschläuche für Lackierpistolen werden im Gebrauch der Lackieranlage oftmals stark beansprucht und unterliegen daher erheblicher Abnutzung. Eine Schutzhülle kann hier den Verschleiß reduzieren oder gar verhindern, so dass ggf. nur die Schutzhülle anstatt der Anschlussschlauch bei Beschädigung ausgetauscht werden muss. Die Verwendung einer derartigen Schutzhülle kann für sich gesehen ein Anwendungsfall darstellen und ist von dem hier beschriebenen Lackierluft-Zuleitungssystem unabhängig.

Im vorgeschlagenen Lackierluft-Zuleitungssystem kann jedoch besonders bevorzugt vorgesehen werden, dass die Schutzhülle eine Heizung umfasst, um die relative Feuchte der Druckluft im Anschlussschlauch durch Erwärmung des Anschlussschlauchs auf einen Punkt eingestellt werden, an welchem Kondensation vermieden wird.

Eine bevorzugte Ausführung sieht vor, dass an der Lackierpistole und/oder zwischen der Lackierpistole und dem pistolenseitigen Ende des Anschlussschlauch ein Ventil umfasst ist, wobei das Ventil zumindest zeitweise einen Volumenstrom Druckluft aus dem Zuleitungssystem in die Umgebungsluft entweichen lässt. Besonders bei der Unterbrechung des Lackiervorgangs ist es, wie oben bereits dargelegt erforderlich, das System "bluten" zu lassen, um stehende befeuchtete Druckluft im Luftweg zu vermeiden, wodurch Kondensation von Flüssigkeit entsteht. Durch den kontinuierlichen Luftstrom wird die feuchte Druckluft stets bewegt und Kondensation vermieden bzw. Kondensat wird abtransportiert. Dem Ventil kann auch ein weiterer Flüssigkeitsabscheider nachgeschaltet werden oder die feuchte Druckluft entweicht ohne Abscheidung in die Umgebung.

Insbesondere ist auch bei diesem Ventil von einem entweichenden geringen Volumenstrom, insbesondere ein Volumen von 10-150 NL/min, vorzugsweise 20-100NL/min., besonders bevorzugt 30-60NL/min, bevorzugt auszugehen, damit im Lackierluft-Zuleitungssystem stets eine Luftströmung fließt und/oder wobei dass das Ventil an der Pistole, insbesondere mit der Pistole gekoppelt steuerbar und/oder regelbar ist, so dass bei Druckluftbezug für den Lackierprozess keine Entweichung stattfindet, und das gesamte Volumen für den Lackierprozess zur Verfügung steht.

"Angeschlossen" im Sinne der Erfindung bedeutet, dass eine Verbindung zur Durchleitung eines Druckluftstroms besteht, der Leitungsweg somit kontaktiert ist.

Schematisch soll das Prinzip am nachfolgenden Ausführungsbeispiel näher erläutert werden.

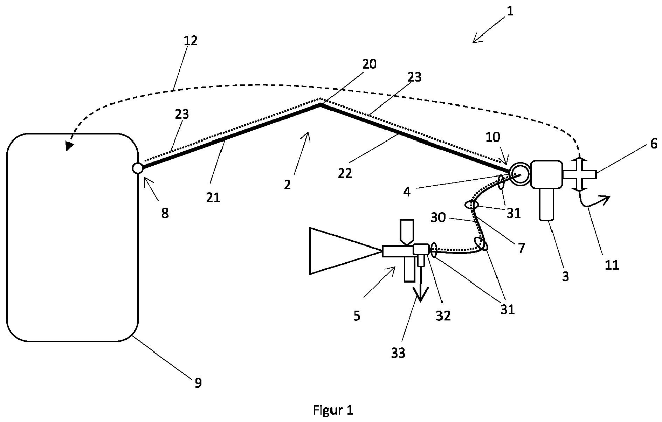

Es zeigt dabei Figur 1 eine schematische Darstellung eines entsprechenden erfindungsgemäßen Lackiererluft-Zuleitungssystems. Dabei ist ein Lackierluft-Zuleitungssystem 1 mit einer Druckluftleitung 2, einem Flüssigkeitsabscheider 3 sowie einer Druckluftkupplung 4 zum Anschluss einer Lackierpistole 5 und ein Druckluftventil 6 dargestellt.

Die Lackierpistole 5 ist über einen Anschlussschlauch 7 mit der Druckluftkupplung 4 verbunden. Der Anschlussschlauch 7 ist bevorzugt heizbar ausgebildet, wobei entweder ein Schlauch mit integrierter Heizung 30 vorgesehen ist, und/oder die Heizung 30 in Form einer Schutzhülle 31 (hier angedeutet durch ummantelnde Kreise) um den Anschlussschlauch 7 gezogen wird.

Es ist auch denkbar, eine Schutzhülle 31 ohne integrierte Heizung auszubilden, um den Anschlussschlauch 7 beim Gebrauch vor Beschädigungen zu schützen.

Die Druckluftleitung 2 ist mit einem ersten Leitungsende 8 an einer Druckluftquelle 9 angeschlossen. Die Druckluftquelle kann eine Vorrichtung zur Druckluftaufbereitung, insbesondere zur Druckluftbefeuchtung umfassen. Die Druckluftleitung 2 ist mit einem zweiten Leitungsende 10 an der Druckluftkupplung 4 angebunden, bevor daran der Flüssigkeitsabscheider 3 angebunden ist.

Nach dem Flüssigkeitsabscheider 3 ist wiederum das Druckluftventil 6 angebunden, welches vorliegend schematisch einmal einen Ablass der Druckluft in die Umgebung 11 sowie eine Rückführung in den Druckluftkreislauf 12 darstellt. In der Praxis ist der Ablass in die Umgebung 11 oftmals vorteilhaft, da eine Rückführung technisch aufwändig ist und ggf. durch entsprechende Druckgefälle eine Einkopplung in den Druckluftkreislauf erfolgen muss.

Die Druckluftleitung 2 ist vorliegend in einer Dach-Form verlegt dargestellt. Dabei ist ausgehend von ihrem ersten Leitungsende 8 bis zu einem Scheitelpunkt 20 ein erster Leitungsabschnitt 21 ausgebildet, welcher einem monoton steigenden Verlauf ausgehend vom ersten Leitungsende 8 folgt. Von dem Scheitelpunkt 20 bis zum zweiten Leitungsende 10 umfasst die Druckluftleitung 2 einen zweiten Leitungsabschnitt 22, welcher ausgehend vom Scheitelpunkt 20 einen monoton fallenden Verlauf aufweist. Auf diese Weise ist sichergestellt, dass kein Kondensat in der Druckluftleitung stehend abgesetzt werden kann, da das Kondensat stets entweder zur Druckluftquelle 9 oder zum Flüssigkeitsabscheide 3 abfließt. Nicht dargestellt, jedoch ebenso möglich ist der durchgehend monotone Verlauf der Leitungsführung in die eine oder andere Richtung. Die Vermeidung von Senken ist zu bevorzugen, um Kondensat Ansammlungen zu verhindern.

An dem Lackierluft-Zuleitungssystem 1 ist an oder im Bereich der Lackierpistole 5 und/oder zwischen der Lackierpistole 5 und dem pistolenseitigen Ende des Anschlussschlauch 7 eine ein Ventil 32 umfasst. Das Ventil 32 erlaubt zumindest zeitweise einen entweichenden Volumenstrom 33 von Druckluft aus dem Zuleitungssystem in die Umgebungsluft, um entsprechend der oben dargelegten Ausführung zu "bluten" und eine Kondensatbildung durch kontinuierliche Strömung zu vermeiden.

Das Ventil 32 ist dabei insbesondere mit der Pistole 5 gekoppelt steuerbar und/oder regelbar, so dass bei Druckluftbezug für die Pistole 5 im Lackierprozess keine oder nur eine geringere, kontrollierte Menge aus dem Ventil 32 entweicht, um keine Beeinträchtigung der Lackierleistung zu erhalten.

Unter Druckluft im weiteren Sinne ist für diese Erfindung auch Druckgas anderer Art oder Druckgas-Gemische zu verstehen, welche mit hohen Feuchtigkeitsanteilen versehen werden und im Lackierprozess Einsatz finden.

## Patentansprüche

1. Lackierluft-Zuleitungssystem 1, umfassend
eine Druckluftleitung (2),
einen Flüssigkeitsabscheider (3) sowie
eine Druckluftkupplung (4) zum Anschluss einer Lackierpistole (5) und
ein Druckluftventil (6),
wobei die Druckluftleitung (2) mit einem ersten Leitungsende (8) an einer Druckluftquelle (9) angeschlossen ist, und wobei die Druckluftleitung (2) mit einem zweiten Leitungsende (10) an dem Flüssigkeitsabscheider (3) angeschlossen ist,
**dadurch gekennzeichnet, dass**
die Druckluftkupplung (4) zwischen dem zweiten Leitungsende (10) und dem Flüssigkeitsabscheider (3) angeschlossen ist und das Druckluftventil (6) nach dem Flüssigkeitsabscheider (3) angeschlossen ist.

2. Lackierluft-Zuleitungssystem nach Anspruch 1, **dadurch gekennzeichnet, dass** an dem ersten Leitungsende (8) die Druckluftquelle (9) als eine Druckluftquelle für feuchte Druckluft, insbesondere für Druckluft mit einem relativen Feuchtegehalt von über 40%, bevorzugt über 80% angeordnet ist.

3. Lackierluft-Zuleitungssystem nach Anspruch 1 oder 2, **dadurch gekennzeichnet, dass** das Druckluftventil (6) einen geringen Volumenstrom, insbesondere ein Volumen von 10-150 NL/min, vorzugsweise 20-100NL/min., besonders bevorzugt 30-60NL/min, derart passieren lässt, dass im Lackierluft-Zuleitungssystem 1 stets eine Luftströmung fließt.

4. Lackierluft-Zuleitungssystem nach einem der vorangegangenen Ansprüche, **dadurch gekennzeichnet, dass** das Druckluftventil (6), z.B. ausgebildet als ein Schieberventil oder ein Magnetventil, schaltbar, insbesondere in seinem Volumenstrom steuerbar oder regelbar, ausgebildet ist.

5. Lackierluft-Zuleitungssystem nach einem der vorangegangenen Ansprüche, **dadurch gekennzeichnet, dass** das Druckluftventil (6) das Lackierluft-Zuleitungssystem (1) mit der Umgebungsluft (11) verbindet.

6. Lackierluft-Zuleitungssystem nach einem der vorangegangenen Ansprüche 1 bis 4, **dadurch gekennzeichnet, dass** Druckluftventil (6) das Lackierluft-Zuleitungssystem (1) mit einer Lackierluft-Anlage, insbesondere einer Druckluftquelle (9) verbindet, insbesondere die Druckluft in den Kreislauf (12) der Lackierluft zurückführt.

7. Lackierluft-Zuleitungssystem nach einem der vorangegangenen Ansprüche, **dadurch gekennzeichnet, dass** das die Druckluftleitung (2) von ihrem ersten Leitungsende (8) bis zu ihrem zweiten Leitungsende (10) oder von ihrem zweiten Leitungsende (10) bis zu ihrem ersten Leitungsende (8) einen monoton fallenden Verlauf aufweist.

8. Lackierluft-Zuleitungssystem nach einem der vorangegangenen Ansprüche, **dadurch gekennzeichnet, dass** die Druckluftleitung von ihrem ersten Leitungsende (8) bis zu einem Scheitelpunkt (20) einen ersten Leitungsabschnitt (21) aufweist, welcher einem monoton steigenden Verlauf ausgehend vom ersten Leitungsende (8) folgt, und von dem Scheitelpunkt (20) bis zum zweiten Leitungsende (10) einen zweiten Leitungsabschnitt (22) aufweist, welcher ausgehend vom Scheitelpunkt (20) einen monoton fallenden Verlauf aufweist.

9. Lackierluft-Zuleitungssystem nach einem der vorangegangenen Ansprüche, **dadurch gekennzeichnet, dass** die Druckluftleitung 2 zumindest abschnittweise, insbesondere vollständig eine Heizeinrichtung 23 umfasst.

10. Lackierluft-Zuleitungssystem nach einem der vorangegangenen Ansprüche, **dadurch gekennzeichnet**, ein Anschlussschlauch 7 zwischen der Druckluftkupplung 4 und der Lackierpistole 5 umfasst ist, wobei der Anschlussschlauch 7 eine Heizung 30 umfasst.

11. Lackierluft-Zuleitungssystem nach einem der vorangegangenen Ansprüche, **dadurch gekennzeichnet**, ein Anschlussschlauch 7 zwischen der Druckluftkupplung 4 und der Lackierpistole 5 umfasst ist, wobei der Anschlussschlauch 7 eine Schutzhülle 31 umfasst und die Schutzhülle 31 vorzugsweise eine Heizung umfasst.

12. Lackierluft-Zuleitungssystem nach einem der vorangegangenen Ansprüche, **dadurch gekennzeichnet, dass** an der Lackierpistole 5 und/oder zwischen der Lackierpistole 5 und dem pistolenseitigen Ende des Anschlussschlauch 7 eine ein Ventil 32 umfasst ist, wobei das Ventil 32 zumindest zeitweise einen Volumenstrom 33 Druckluft aus dem Zuleitungssystem in die Umgebungsluft entweichen lässt.

13. Lackierluft-Zuleitungssystem nach Anspruch 12, **dadurch gekennzeichnet, dass** das Ventil 32 einen geringen Volumenstrom, insbesondere ein Volumen von 10-150 NL/min, vorzugsweise 20-100NL/min., besonders bevorzugt 30-60NL/min, derart passieren lässt, dass im Lackierluft-Zuleitungssystem 1 stets eine Luftströmung fließt und/oder dass das Ventil 32, insbesondere mit der Pistole 5 gekoppelt steuerbar und/oder regelbar ist.
